# EUROPEAN PATENT APPLICATION

(11) **EP 4 661 122 A1**
(43) Date of publication of application: **10.12.2025**
(21) Application number: 24749892.6
(22) Date of filing: 11.01.2024
(51) Int. Cl.: H01M 8/2465, H01M 8/04, H01M 8/12, H01M 8/2475, H01M 8/2484

(54) **FUEL BATTERY MODULE AND FUEL BATTERY DEVICE**

(30) Priority: 31.01.2023 JP 2023013585
(71) Applicant: Kyocera Corporation, Kyoto-shi, Kyoto 612-8501 (JP)
(72) Inventor: SHIMADA, Mitsutaka, Kyoto-shi, Kyoto 612-8501 (JP)
(74) Representative: TBK
(86) International application number: PCT/JP2024/000498
(87) International publication number: WO 2024/161937

(57) **Abstract**

A fuel cell module includes a fuel cell stack, a terminal, a bus bar, a first joint part, the first joint part, and a container. The terminal is configured to output electric power generated by the fuel cell stack. The bus bar is coupled to the terminal. The first joint part 14 joins the terminal and the bus bar to one another. A second joint part joins the bus bar to an external conductor at a position of the bus bar different from a position joined to the terminal. A linear expansion coefficient of the first joint part is equal to or less than a linear expansion coefficient of the bus bar.

## Description

### CROSS-REFERENCE TO RELATED APPLICATIONS

The present application claims priority to Japanese Patent Application No. 2023-13585 filed on January 31, 2023, the entire disclosure of which is incorporated herein by reference.

### TECHNICAL FIELD

The present disclosure relates to a fuel cell module and a fuel cell device.

### BACKGROUND OF INVENTION

A proposed fuel cell module includes a fuel cell stack accommodated in a container. In the fuel cell module, the fuel cell stack outputs electric power via a conductive part penetrating the container (see Patent Literature 1).

### CITATION LIST

### PATENT LITERATURE

Patent Literature 1: Japanese Unexamined Patent Application Publication No. 2019-016452

### SUMMARY

According to a first aspect, a fuel cell module includes a fuel cell stack, a terminal, a bus bar, a first joint part, a second joint part, and a container. The fuel cell stack includes multiple fuel cells stacked on one another. The terminal is configured to output electric power generated by the fuel cell stack. The bus bar is coupled to the terminal. The first joint part joins the terminal and the bus bar to one another. The second joint part joins an external conductor to the bus bar at a position of the bus bar different from a position joined to the terminal. The container accommodates the fuel cell stack, the terminal, the first joint part, and a portion of the bus bar. A linear expansion coefficient of the first joint part is equal to or less than a linear expansion coefficient of the bus bar.

According to a second aspect, a fuel cell device includes a fuel cell module and auxiliary equipment. The fuel cell module includes a fuel cell stack, a terminal, a bus bar, a first joint part, a second joint part, and a container. The fuel cell stack includes multiple fuel cells stacked on one another. The terminal is configured to output electric power generated by the fuel cell stack. The bus bar is coupled to the terminal. The first joint part joins the terminal and the bus bar to one another. The second joint part joins an external conductor to the bus bar at a position of the bus bar different from a position joined to the terminal. The container accommodates the fuel cell stack, the terminal, the first joint part, and a portion of the bus bar. A linear expansion coefficient of the first joint part is equal to or less than a linear expansion coefficient of the bus bar. The auxiliary equipment includes an auxiliary function to cause the fuel cell module to operate.

### BRIEF DESCRIPTION OF THE DRAWINGS

FIG. 1 is a side view of a container and an inside thereof, where a fuel cell module is cut, according to this embodiment.
FIG. 2 is an enlarged perspective view of a structure of a vicinity of a terminal in FIG. 1.
FIG. 3 is a perspective view of the inside of the container of the fuel cell module in FIG. 1.
FIG. 4 is a top view of the fuel cell module, where a reformer is excluded from FIG. 3 and a supply pipe is cut at a position of a board part in a second direction.

### DESCRIPTION OF EMBODIMENTS

Hereinafter, an embodiment of the present disclosure is described with reference to the drawings. Among components described below and illustrated in the drawings, the same components are denoted by the same reference signs.

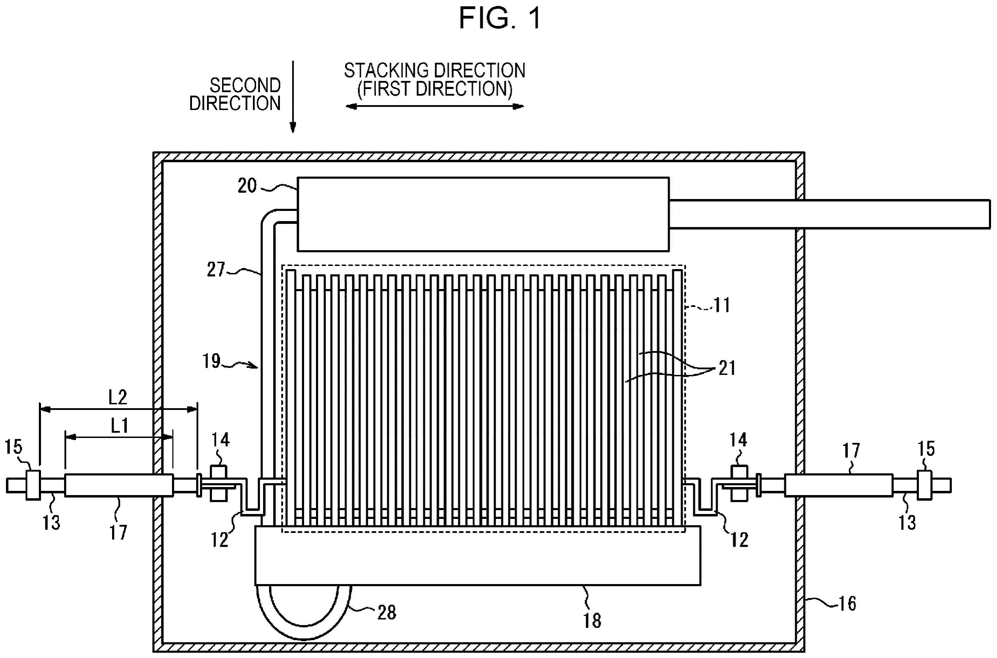

According to an embodiment of the present disclosure, as illustrated in FIG. 1, a fuel cell module 10 includes a fuel cell stack 11, terminals 12, bus bars 13, first joint parts 14, second joint parts 15, and a container 16. The fuel cell module 10 may further include insulation parts 17, a manifold 18, a supply pipe 19, and a reformer 20.

The fuel cell stack 11 may include multiple fuel cells 21 stacked on one another. The multiple fuel cells 21 may be solid oxide fuel cells. The multiple fuel cells 21 generate electricity by electrochemical reaction of fuel generated by the reformer 20 and an oxidant, such as oxygen contained in air. The multiple fuel cells 21 may be coupled to one another in series, in parallel, or a combination thereof.

Each of the terminals 12 is electrically coupled to the fuel cell stack 11. The terminal 12 outputs electric power generated by the fuel cell stack 11. The terminal 12 may include a portion extending in a first direction away from the fuel cell stack 11. Specifically, this portion may extend parallel to a stacking direction of the multiple fuel cells 21 of the fuel cell stack 11.

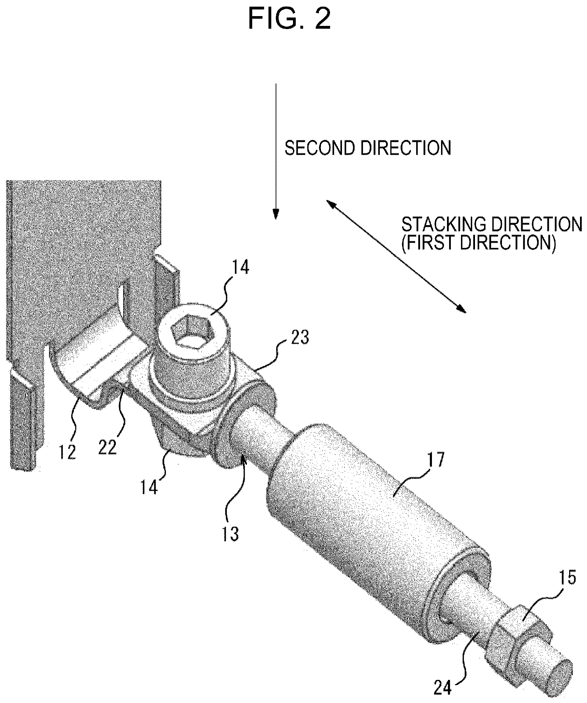

As illustrated in FIG. 2, the terminal 12 may include a flat-plate-shaped portion 22. In the terminal 12, this flat-plate-shaped portion 22 may be located farthest from the fuel cell stack 11. The flat-plate-shaped portion 22 may extend perpendicularly to a second direction. The second direction is a direction perpendicular to the first direction and is a direction to be vertically downward when a fuel cell device including the fuel cell module 10 is installed.

The terminal 12 may be made of a material with heat resistance, elasticity, and conductivity. The terminal 12 may be made of a material including a magnetic material. Specifically, the terminal 12 may be made of ferritic stainless steel.

Each of the bus bars 13 is coupled to the terminal 12. The bus bar 13 may have a bar-like shape as a whole. The bus bar 13 may include a flat-plate-shaped portion 23 and a cylindrical portion 24. The flat-plate-shaped portion 23 may be joined to be parallel to an axial direction of the cylindrical portion 24.

The bus bar 13 may be coupled to the terminal 12 at the flat-plate-shaped portion 23. Specifically, the bus bar 13 may be coupled to the terminal 12 such that the flat-plate-shaped portion 22 of the terminal 12 and the flat-plate-shaped portion 23 of the bus bar 13 surface-contact with one another. The bus bar 13 may be coupled to the terminal 12 such that the bus bar 13 extends in the first direction.

The bus bar 13 may include a male screw at an end opposite to the flat-plate-shaped portion 23.

A linear expansion coefficient of the bus bar 13 may be closer to a linear expansion coefficient of the terminal 12 than to a linear expansion coefficient of each of the second joint parts 15. A linear expansion coefficient being close means that difference in the linear expansion coefficient is small. The bus bar 13 may be made of a material including a magnetic material. The bus bar 13 may be made of a material the same as that for the terminal 12. The bus bar 13 may be made of ferritic stainless steel or austenite stainless steel.

Each of the first joint parts 14 joins the terminal 12 and the bus bar 13 to one another. The first joint part 14 may detachably join the terminal 12 and the bus bar 13. The first joint part 14 may fasten the terminal 12 and the bus bar 13 to sandwich both of the terminal 12 and the bus bar 13, thus joining the terminal 12 and the bus bar 13. To be more specific, the first joint part 14 can keep the terminal 12 and the bus bar 13 in a joined state, and removal of the first joint part 14 may cause the joined state to be cancelled.

For example, the first joint part 14 may be a set of a bolt and a nut. The first joint part 14 including a bolt and a nut joins the terminal 12 and the bus bar 13 with the nut being fastened while the bolt is inserted into holes perforated in the flat-plate-shaped portion 22 and the flat-plate-shaped portion 23. The first joint part 14 may be, for example, a mechanical joint tool, such as a clip, other than the set of the bolt and the nut.

A linear expansion coefficient of the first joint part 14 is equal to or less than the linear expansion coefficient of the bus bar 13. The linear expansion coefficient of the first joint part 14 may be less than the linear expansion coefficient of the second joint part 15. The linear expansion coefficient of the first joint part 14 may be closer to the linear expansion coefficient of the terminal 12 than to the linear expansion coefficient of the second joint part 15. The linear expansion coefficient of the first joint part 14 may be closer to the linear expansion coefficient of the terminal 12 than to the linear expansion coefficient of the bus bar 13.

The first joint part 14 may be made of a material that is excellent in corrosion resistance, heat resistance, and processability. The first joint part 14 may be made of a material including a magnetic material. The first joint part 14 may be made of a material the same as or different from that for the terminal 12. Specifically, the first joint part 14 may be made of ferritic stainless steel.

The second joint part 15 joins an external conductor to the bus bar 13 at a position of the bus bar 13 different from the position joined to the terminal 12. The position different from the position joined to the terminal 12 is, for example, a vicinity of an end of the bus bar 13 opposite to the terminal 12 in the first direction. For example, the external conductor is a conductive wire of an apparatus, such as a power conversion system, which receives power output from the fuel cell stack 11.

The second joint part 15 may detachably join the bus bar 13 and the external conductor. To be more specific, the first joint part 14 can keep the bus bar 13 and the external conductor in a joined state, and removal of the second joint part 15 may cause the joined state to be cancelled.

When a male screw is formed at the cylindrical portion 24, the second joint part 15 may be a nut. The second joint part 15 may be another mechanical joint tool other than the nut.

The second joint part 15 may be made of a material that is high in heat resistance and corrosion resistance as well as high in strength. The second joint part 15 may be made of oxidation-resistant metal. The linear expansion coefficient of the second joint part 15 is different from the linear expansion coefficient of the first joint part 14. The linear expansion coefficient of the second joint part 15 may be greater than the linear expansion coefficient of the first joint part 14. The second joint part 15 may be made of austenite stainless steel.

As illustrated in FIG. 1, the container 16 accommodates the fuel cell stack 11, the terminals 12, and the first joint parts 14. The container 16 also accommodates portions of the bus bars 13. The container 16 may further accommodate portions of the insulation parts 17, the manifold 18, the supply pipe 19, and the reformer 20.

The insulation part 17 may be provided to the bus bar 13. The insulation part 17 may electrically insulate the bus bar 13 from the container 16. Therefore, the insulation part 17 may be interposed at an entire region between the bus bar 13 and the container 16. Specifically, the insulation part 17 may have a cylindrical shape and may be provided in the first direction such that the cylindrical portion 24 of the bus bar 13 is placed through the insulation part 17. A length L1 of the insulation part 17 in the first direction may be more than half, and three quarters of a length L2 of the bus bar 13 in the first direction. The length of the bus bar 13 is a length from a tip end of the cylindrical portion to immediately before the second joint part 15.

The insulation part 17 may be fixed to the container 16 with the insulation part 17 penetrating the container 16. Specifically, the insulation part 17 may be fixed to the container 16 such that the insulation part 17 is fitted into a hole perforated in the container 16.

The insulation part 17 may be made of an insulation material. A linear expansion coefficient of the insulation part 17 may be less than the linear expansion coefficient of the bus bar 13. Specifically, the insulation part 17 may be made of a ceramic material, such as alumina or steatite.

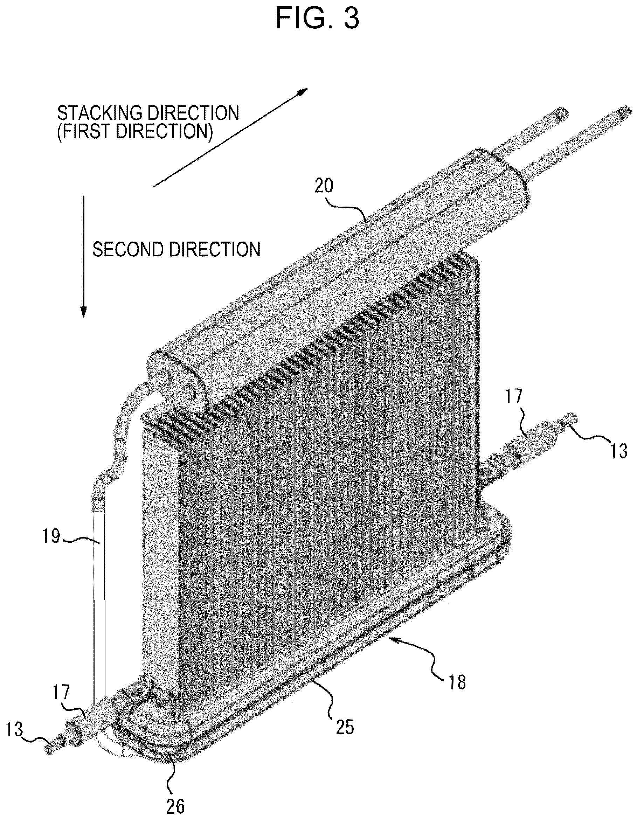

The manifold 18 may fix one ends of the multiple fuel cells 21 to the manifold 18. Specifically, the manifold 18 may fix thereto ends of the multiple fuel cells 21 on a first-direction side. The manifold 18 may supply gas to each of the multiple fuel cells 21. Specifically, the manifold 18 may supply fuel gas to each of the multiple fuel cells 21. Specifically, as illustrated in FIG. 3, the manifold 18 may include a box part 25 and a board part 26.

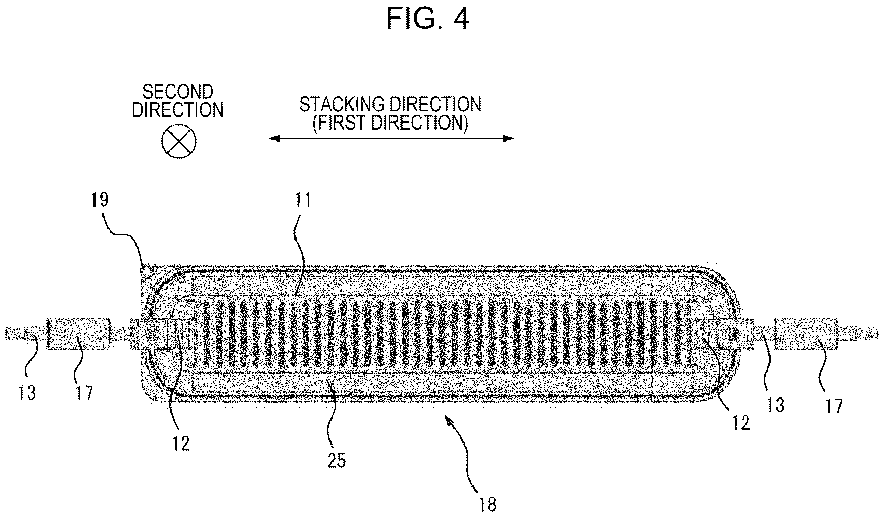

The box part 25 may define an internal space. The multiple fuel cells 21 may be inserted into one surface of the box part 25. Gas flowed from the supply pipe 19 into the internal space of the box part 25 may be supplied to each of the multiple fuel cells 21. As illustrated in FIG. 4, when seen in the second direction, the box part 25 may have a rounded rectangular shape with long sides in the first direction.

The board part 26 may project from an exterior wall surface of the box part 25. The board part 26 may be located on a side where the supply pipe 19 is provided in the first direction. The board part 26 may project from a corner of the box part 25 when seen in the second direction. Specifically, the board part 26 may project from both corners of the box part 25 on the side where the supply pipe 19 is provided in the first direction, when seen in the second direction. The board part 26 may include a fan-shaped cutout at one corner. The board part 26 may extend perpendicularly to the second direction.

The supply pipe 19 may supply gas to the manifold 18. Specifically, an internal space of the supply pipe 19 may communicate with the internal space of the box part 25 of the manifold 18. As illustrated in FIG. 1, the supply pipe 19 may include a linear portion 27 extending in the second direction and a curved portion 28 having a U-shape and continuing from an end of the linear portion 27 on a second-direction side. The curved portion 28 may be coupled to a bottom surface of the box part 25 on the second-direction side.

The supply pipe 19 may be joined to the manifold 18 at a position different from the position communicating with the box part 25. The supply pipe 19 may be joined to the manifold 18 only at a portion of the supply pipe 19 in an entire circumferential direction of an axis thereof. Further specifically, the supply pipe 19 may be joined to an outer edge of the board part 26 of the manifold 18. In further detail, the supply pipe 19 may be joined to a corner of the board part 26. When the board part 26 includes the fan-shaped cutout at the corner, the supply pipe 19 may be joined in the cutout.

The reformer 20 may reform light hydrocarbon, such as city gas, to generate hydrogen, which is fuel gas for the multiple fuel cells 21. The reformer 20 may be located on a side of the fuel cell stack 11 opposite to the second direction. The reformer 20 may supply fuel gas to the reformer 20 via the supply pipe 19.

The fuel cell module 10 of this embodiment with the configuration described above includes the fuel cell stack 11, the terminals 12, the bus bars 13, the first joint parts 14, the second joint parts 15, and the container 16. The fuel cell stack 11 includes the multiple fuel cells 21 stacked on one another. Each of the terminals 12 outputs electric power generated by the fuel cell stack 11. Each of the bus bars 13 is coupled to the terminal 12. Each of the first joint part 14s joins the terminal 12 and the bus bar 13 to one another. Each of the second joint parts 15 joins the external conductor to the bus bar 13 at the position of the bus bar 13 different from the position joined to the terminal 12. The container 16 accommodates the fuel cell stack 11, the terminals 12, the first joint parts 14, and portions of the bus bars 13. The linear expansion coefficient of the first joint part 14 is equal to or less than the linear expansion coefficient of the bus bar 13. A temperature inside the container 16 during power generation is higher than that when the power generation is suspended. Therefore, switching between operation and suspension of power generation causes a change in temperature to the first joint part 14 and the bus bar 13. With regard to such a matter, the fuel cell module 10 with the configuration described above may have a reduced gap to be formed between the first joint part 14 and the bus bar 13 even when the temperature of the first joint part 14 and the bus bar 13 changes. In this manner, the fuel cell module 10 has improved joining of the terminal 12 and the bus bar 13 that are multiple members included in conductors to output power from the fuel cell stack 11.

In the fuel cell module 10, the linear expansion coefficient of the first joint part 14 is less than the linear expansion coefficient of the second joint part 15. The first joint part 14 is located closer to the fuel cell stack 11 than the second joint part 15 is. Therefore, the first joint part 14 is supposed to be exposed to high temperature atmosphere more than the second joint part 15. On the other hand, the second joint part 15 is supposed to be coupled to external wiring and/or the like, and thereby tensile stress may be applied to the second joint part 15. With regard to such supposition, in the fuel cell module 10 with the configuration described above, the second joint part 15 deforms more easily than the first joint part 14, and thereby tensile stress may ease.

In the fuel cell module 10, the linear expansion coefficient of the first joint part 14 is closer to the linear expansion coefficient of the terminal 12 than to the linear expansion coefficient of the second joint part 15. With such a configuration, the fuel cell module 10 has reduced difference in a degree of expansion-and-contraction between the terminal 12 and the first joint part 14 caused by a change in temperature. Accordingly, decrease in difference in a degree of expansion-and-contraction allows the fuel cell module 10 to have less possibility of abrasion of an oxide film on a surface of the first joint part 14, for example. Thereby, the fuel cell module 10 may have a reduced increase in resistance due to abrasion of the oxide film.

In the fuel cell module 10, the terminal 12 and the first joint part 14 are made of ferritic stainless steel. Since the fuel cell module 10 has such a configuration, in a joining process of the terminal 12 and the bus bar 13 by using the first joint part 14, the first joint part 14 may be fixed by utilizing magnetic force caused by the ferritic stainless steel. Therefore, the joining process is facilitated in the fuel cell module 10. Ferritic stainless steel has a comparatively low thermal expansion coefficient, and thereby the fuel cell module 10 may have a reduced gap to be formed between the terminal 12 and the first joint part 14 that are located closer to the fuel cell stack 11 and exposed to high temperature atmosphere.

In the fuel cell module 10, the second joint part 15 is made of austenite stainless steel. With such a configuration, in the fuel cell module 10, since austenite stainless steel has a comparatively high thermal expansion coefficient, tensile stress applied from external wiring and/or the like may ease.

In the fuel cell module 10, the linear expansion coefficient of the first joint part 14 is closer to the linear expansion coefficient of the terminal 12 than to the linear expansion coefficient of the bus bar 13. The first joint part 14 and the terminal 12 as a whole are located closer to the fuel cell stack 11 than the bus bar 13 is and are exposed to high temperature atmosphere. With regard to such a matter, the fuel cell module 10 with the configuration described above may have a reduced gap to be formed between the terminal 12 and the first joint part 14 exposed to high temperature atmosphere.

The fuel cell module 10 includes the insulation part 17. The insulation part 17 has the linear expansion coefficient less than the linear expansion coefficient of the bus bar 13, is provided to the bus bar 13 in the first direction, is fixed with the insulation part 17 penetrating the container 16, and electrically insulates the bus bar 13 from the container 16. The insulation part 17 is in contact with the bus bar 13, and thereby the insulation part 17 expands and contracts by repetition of operation and suspension of power generation by the fuel cell stack 11. Therefore, expansion and contraction of the insulation part 17 applies stress to the container 16. With regard to such a matter, in the fuel cell module 10 with the configuration described above, the insulation part 17 has the linear expansion coefficient less than that of the bus bar 13, and thereby stress applied to the container 16 may ease. In the fuel cell module 10, the length L1 of the insulation part 17 in the first direction is more than half and equal to or less than three quarters of the length L2 of the bus bar 13. With such a configuration, the fuel cell module 10 has a defined lower limit value of the length L1 of the insulation part 17 in the first direction, and thereby the insulation part 17 can more certainly be interposed between the bus bar 13 and the container 16. Therefore, the fuel cell module 10 may sufficiently demonstrate the effect of easing stress on the container 16. In addition, the fuel cell module 10 has a defined upper limit value of the length L1 of the insulation part 17 in the first direction, and thereby the bus bar 13 may ensure the portion coupled to an external conductor.

The fuel cell module 10 includes the manifold 18 and the supply pipe 19 that supplies gas to the manifold 18. The supply pipe 19 is joined to the manifold 18 only at a portion of the supply pipe 19 in the circumferential direction. The supply pipe 19 is preferably supported at many portions in the container 16. Therefore, the supply pipe 19 is considered to be supported by the manifold 18 at a portion other than the supply part. When the supply pipe 19 is supported by the manifold 18, the supply pipe 19 is considered to penetrate the manifold 18 to be joined by welding or the like over an entire inner peripheral surface of a through-hole of the manifold 18 and an entire outer peripheral surface of the supply pipe 19 in the circumferential direction. On the other hand, in the fuel cell module 10 with the configuration described above, the supply pipe 19 is joined to the manifold 18 only at a portion of the supply pipe 19 in the circumferential direction. Therefore, upon change in temperature due to operation and suspension of power generation, concentration of stress at the joining portion between the supply pipe 19 and the manifold 18 may ease. Accordingly, ease in stress may allow the fuel cell module 10 to have less possibility of abrasion of the supply pipe 19 from the manifold 18.

In the fuel cell module 10, the manifold 18 includes the box part 25 and the board part 26. The supply pipe 19 is joined to the outer edge of the board part 26. As described above, when the supply pipe 19 penetrates the manifold 18 to be joined over the entire inner peripheral surface of the through-hole of the manifold 18 and the entire outer peripheral surface of the supply pipe 19 in the circumferential direction, the manifold 18 needs to include an area larger than a size of the through-hole in addition to an area supporting the fuel cell stack 11 when seen in the second direction. On the other hand, in the fuel cell module 10 with the configuration described above, ensuring the area larger than the size of the through-hole is not necessary, and thereby the manifold 18 may have a smaller size when seen in the second direction. Therefore, the fuel cell module 10 may have a reduced size as a whole.

In the fuel cell module 10, the supply pipe 19 is joined to the corner of the board part 26. With such a configuration, in the fuel cell module 10, the joining part between the supply pipe 19 and the board part 26 may be located apart from the communicating part between the supply pipe 19 and the box part 25 when seen in the second direction. Therefore, the curved portion 28 of the supply pipe 19 may have a larger radius of curvature, which may reduce bending stress applied to the curved portion 28.

In the fuel cell module 10, the linear expansion coefficient of the second joint part 15 is greater than the linear expansion coefficient of the first joint part 14. The second joint part 15 is coupled to an external conductor, thus receiving tensile stress from the external conductor at a high frequency. With respect to such a matter, in the fuel cell module 10 with the configuration described above, the second joint part 15 easily deforms, and thereby the tensile stress may ease.

In an embodiment, (1) a fuel cell module includes: a fuel cell stack including multiple fuel cells stacked on one another; a terminal configured to output electric power generated by the fuel cell stack; a bus bar coupled to the terminal; a first joint part joining the terminal and the bus bar to one another; a second joint part joining an external conductor to the bus bar at a position of the bus bar different from a position joined to the terminal; and a container accommodating the fuel cell stack, the terminal, the first joint part, and a portion of the bus bar, wherein a linear expansion coefficient of the first joint part is equal to or less than a linear expansion coefficient of the bus bar.

(2) The fuel cell module of (1), wherein the linear expansion coefficient of the first joint part is less than a linear expansion coefficient of the second joint part.

(3) The fuel cell module of (1) or (2), wherein the linear expansion coefficient of the first joint part is closer to a linear expansion coefficient of the terminal than to a linear expansion coefficient of the second joint part.

(4) The fuel cell module of (1) to (3), wherein the terminal and the first joint part are made of ferritic stainless steel, and the second joint part is made of austenite stainless steel.

(5) The fuel cell module of (1) to (4), wherein the linear expansion coefficient of the first joint part is closer to a linear expansion coefficient of the terminal than to the linear expansion coefficient of the bus bar.

(6) The fuel cell module of (1) to (5), further including an insulation part having a linear expansion coefficient less than the linear expansion coefficient of the bus bar, provided to the bus bar in a first direction, having a length L1 in the first direction more than half and equal to or less than three quarters of a length L2 of the bus bar, fixed with the insulation part penetrating the container, and electrically insulating the bus bar from the container, wherein the first direction is a direction in which the bus bar separates from the fuel cell stack.

(7) The fuel cell module of (1) to (6), further including a manifold fixing one ends of the multiple fuel cells to the manifold and configured to supply gas to the multiple fuel cells; and a supply pipe configured to supply gas to the manifold, wherein the supply pipe is joined to the manifold only at a portion of the supply pipe in a circumferential direction.

(8) The fuel cell module of (7), wherein the manifold includes a box part and a board part, the box part defining an internal space communicating with the supply pipe, the board part projecting from an exterior wall surface of the box part, and the supply pipe is joined to an outer edge of the board part.

(9) The fuel cell module of (8), wherein the supply pipe is joined to a corner of the board part.

In an embodiment, (10) a fuel cell device includes: the fuel cell module of (1) to (9); and auxiliary equipment with an auxiliary function to cause the fuel cell module to operate.

The drawings for explaining an embodiment according to the present disclosure are schematic. Dimensional ratios and the like in the drawings do not necessarily match the actual ones.

Although an embodiment according to the present disclosure has been described based on the drawings and examples, those skilled in the art can change or alter the embodiment in various ways based on the present disclosure. Therefore, the scope of the present disclosure includes such changes or alterations. For example, the functions and the like of the components may be rearranged such that no logical contradiction is caused, and a plurality of components may be combined together or divided.

All the elements described in the present disclosure and/or all the disclosed methods or steps of processes may be combined together in any combination unless features included in the combination are mutually exclusive. Each of the features described in the present disclosure may be replaced by alternative features that serve for the same purposes, equivalent purposes, or similar purposes, unless explicitly denied. Therefore, each of the disclosed features is merely an example of a comprehensive set of the same or equivalent features, unless explicitly denied.

An embodiment according to the present disclosure is not limited to any of the specific configurations in the above-described embodiment. An embodiment according to the present disclosure can be extended to all the novel features described in the present disclosure or any combination thereof or all the novel methods or steps of processes described in the present disclosure or any combination thereof.

Terms such as "first" and "second" in the present disclosure are identifiers for distinguishing the corresponding components. The components distinguished with the terms such as "first" and "second" in the present disclosure can exchange the numbers thereof. For example, the first joint part may exchange "first" for "second", which are identifiers, with the second joint part. The identifiers are simultaneously exchanged. Even after the exchange of the identifiers, the components are still distinguished from one another. Identifiers may be removed. Components from which identifiers have been removed are distinguished from one another by reference signs. The identifiers such as "first" and "second" in the present disclosure are not to be used as a sole basis for interpretation of order of the components or presence of an identifier with a smaller number.

### REFERENCE SIGNS

- 10: fuel cell module
- 11: fuel cell stack
- 12: terminal
- 13: bus bar
- 14: first joint part
- 15: second joint part
- 16: container
- 17: insulation part
- 18: manifold
- 19: supply pipe
- 20: reformer
- 21: fuel cell
- 22: flat-plate-shaped portion
- 23: flat-plate-shaped portion
- 24: cylindrical portion
- 25: box part
- 26: board part
- 27: linear portion
- 28: curved portion

## Claims

1. A fuel cell module comprising:
a fuel cell stack comprising multiple fuel cells stacked on one another;
a terminal configured to output electric power generated by the fuel cell stack;
a bus bar coupled to the terminal;
a first joint part joining the terminal and the bus bar to one another;
a second joint part joining an external conductor to the bus bar at a position of the bus bar different from a position joined to the terminal; and
a container accommodating the fuel cell stack, the terminal, the first joint part, and a portion of the bus bar, wherein
a linear expansion coefficient of the first joint part is equal to or less than a linear expansion coefficient of the bus bar.

2. The fuel cell module according to claim 1, wherein the linear expansion coefficient of the first joint part is less than a linear expansion coefficient of the second joint part.

3. The fuel cell module according to claim 1 or 2, wherein the linear expansion coefficient of the first joint part is closer to a linear expansion coefficient of the terminal than to a linear expansion coefficient of the second joint part.

4. The fuel cell module according to any one of claims 1 to 3, wherein the terminal and the first joint part are made of ferritic stainless steel, and
the second joint part is made of austenite stainless steel.

5. The fuel cell module according to any one of claims 1 to 4, wherein the linear expansion coefficient of the first joint part is closer to a linear expansion coefficient of the terminal than to the linear expansion coefficient of the bus bar.

6. The fuel cell module according to any one of claims 1 to 5, further comprising an insulation part having a linear expansion coefficient less than the linear expansion coefficient of the bus bar, provided to the bus bar in a first direction, having a length in the first direction more than half and equal to or less than three quarters of a length of the bus bar, fixed with the insulation part penetrating the container, and electrically insulating the bus bar from the container, wherein the first direction is a direction in which the bus bar separates from the fuel cell stack.

7. The fuel cell module according to any one of claims 1 to 6, further comprising:
a manifold fixing one ends of the multiple fuel cells to the manifold and configured to supply gas to the multiple fuel cells; and
a supply pipe configured to supply gas to the manifold, wherein
the supply pipe is joined to the manifold only at a portion of the supply pipe in a circumferential direction.

8. The fuel cell module according to claim 7, wherein the manifold comprises a box part and a board part, the box part defining an internal space communicating with the supply pipe, the board part projecting from an exterior wall surface of the box part, and
the supply pipe is joined to an outer edge of the board part.

9. The fuel cell module according to claim 8, wherein the supply pipe is joined to a corner of the board part.

10. A fuel cell device comprising:
the fuel cell module according to any one of claims 1 to 9; and
auxiliary equipment with an auxiliary function to cause the fuel cell module to operate.
